# EUROPEAN PATENT APPLICATION

(11) **EP 1 024 041 A1**
(43) Date of publication of application: **02.08.2000**
(21) Application number: 99204409.9
(22) Date of filing: 20.12.1999
(51) Int. Cl.: B60H 1/00

(54) **Flap valve mechanism and air treatment system**

(30) Priority: 28.01.1999 GB 9901791
(71) Applicant: Delphi Technologies, Inc., Troy, MI 48007 (US)
(72) Inventor: Petesch, Jean-Claude, 8071 Bertrange (LU); Clepkens, Stephane C.A., 6760 Bleid (BE)
(74) Representative: Denton, Michael John

(57) **Abstract**

A flap valve mechanism (20) for use in the air treatment system (10) of a passenger compartment of a motor vehicle in which the system comprises two adjacent ducts (12,14) for the flow of air, the mechanism comprising a shaft (22) rotatable about its longitudinal axis (X) and extendable through both ducts; a first flap valve (24) rotatably mounted on the shaft and positionable in one of the ducts, the first flap valve being pivotable about the shaft axis between a substantially fully open position and a substantially fully closed position; a second flap valve (26) rotatably mounted on the shaft and positionable in the other of the ducts, the second flap valve being pivotable about the shaft axis between a substantially fully open position and a substantially fully closed position; first drive means (36) associated with the shaft and the first flap valve for driving the first flap valve from the fully open position to the fully closed position on rotation of the shaft in one direction; second drive means (38) associated with the shaft and the second flap valve for driving the second flap valve from the fully closed position to the fully open position on rotation of the shaft in the other direction; and spring means (30) associated with the first and second flap valves for biasing the first and second flap valves to a predetermined relative angular separation. Allows independent movement of the flap valves for certain positions of the flap valves using a single shaft.

## Description

### Technical Field

The present invention relates to a flap valve mechanism for use in the air treatment (heating, cooling or ventilating) system, for example, an air conditioning system, for the passenger compartment of a motor vehicle, and an air treatment system including the flap valve mechanism.

### Background of the Invention

In an air conditioning system or other air treatment system for the passenger compartment of a motor vehicle, it is known to have two or more ducts for the flow of air into the passenger compartment. A flap valve is positioned inside each duct and is pivotable between a substantially fully open position and a substantially fully closed position. Where the ducts are positioned adjacent each other, the flap valves in each duct may be mounted on a common rotatable shaft and be operated by a single actuating device. This arrangement has the disadvantage that actuation of the actuating device moves both flap valves at the same time, for all positions of the valves between fully open and fully closed. Where independent operation of the flap valves is required, separate shafts and separate actuating devices are provided.

### Summary of the Invention

It is an object of the present invention to overcome the above mentioned disadvantage.

A flap valve mechanism in accordance with the present invention for, use in the air treatment system of a passenger compartment of a motor vehicle in which the system comprises two adjacent ducts for the flow of air, comprises a shaft rotatable about its longitudinal axis and extendable through both ducts; a first flap valve rotatably mounted on the shaft and positionable in one of the ducts, the first flap valve being pivotable about the shaft axis between a substantially fully open position and a substantially fully closed position; a second flap valve rotatably mounted on the shaft and positionable in the other of the ducts, the second flap valve being pivotable about the shaft axis between a substantially fully open position and a substantially fully closed position; first drive means associated with the shaft and the first flap valve for driving the first flap valve from the fully open position to the fully closed position on rotation of the shaft in one direction; second drive means associated with the shaft and the second flap valve for driving the second flap valve from the fully closed position to the fully open position on rotation of the shaft in the other direction; and spring means associated with the first and second flap valves for biasing the first and second flap valves to a predetermined relative angular separation.

An air treatment system in accordance with the present invention, for the passenger compartment of a motor vehicle, comprises a first duct for the flow of air; a second duct for the flow of air adjacent the first duct; a flap valve mechanism including a shaft rotatable about its longitudinal axis and extending through both ducts, a first flap valve rotatably mounted on the shaft in the first duct, the first flap valve being pivotable about the shaft axis a position in which the first duct is substantially fully open and a position in which the first duct is substantially fully closed, a second flap valve rotatably mounted on the shaft in the second duct, the second flap valve being pivotable about the shaft axis between a position in which the second duct is substantially fully open and a position in which the second duct is substantially fully closed, spring means associated with the first and second flap valves for biasing the first and second flap valves to a predetermined relative angular separation, first drive means associated with the shaft and the first flap valve for driving the first flap valve to the fully closed position against the bias of the spring means on rotation of the shaft in one direction, and second drive means associated with the shaft and the second flap valve for driving the second flap valve to the fully open position against the bias of the spring means on rotation of the shaft in the other direction; a first stop member engaging the first flap valve in the fully open position of the first flap valve; a second stop member engaging the second flap valve in the fully closed position of the second flap valve; and actuating means for rotating the shaft about its axis.

The present invention is such that operation of the flap valve mechanism by rotation of the shaft allows the flap valves to be moved independently of each other for certain positions of the flap valves, and such independent operation is obtained using a single shaft and a single actuating means.

### Brief Description of the Drawings

The present invention will now be described, by way of example, with reference to the accompanying drawings, in which:-
Figure 1 is a schematic perspective view of a flap valve mechanism in accordance with the present invention positioned in adjacent ducts of an air treatment system in accordance with the present invention;
Figure 2 is a side view of the biasing arrangement between the flap valves of the mechanism of Figure 1;
Figure 3 is schematic views of the relative positions of the flap valves of the mechanism of Figure 1, as the valves are each rotated from a fully open position to a fully closed position;
Figure 4 is schematic views as shown in Figure 3 with more detail of the drive arrangement between the shaft and the flap valves, and the position of the shaft relative to the flap valves;
Figure 5 is schematic views similar to that shown in Figure 4 of an alternative embodiment for the drive arrangement between the shaft and the flap valves;
Figure 6 is a cross-sectional view of a further alternative embodiment for the drive arrangement between the shaft and the flap valves; and
Figure 7 is a cross-sectional view of another alternative embodiment for the drive arrangement between the shaft and the flap valves.

### Description of the Preferred Embodiment

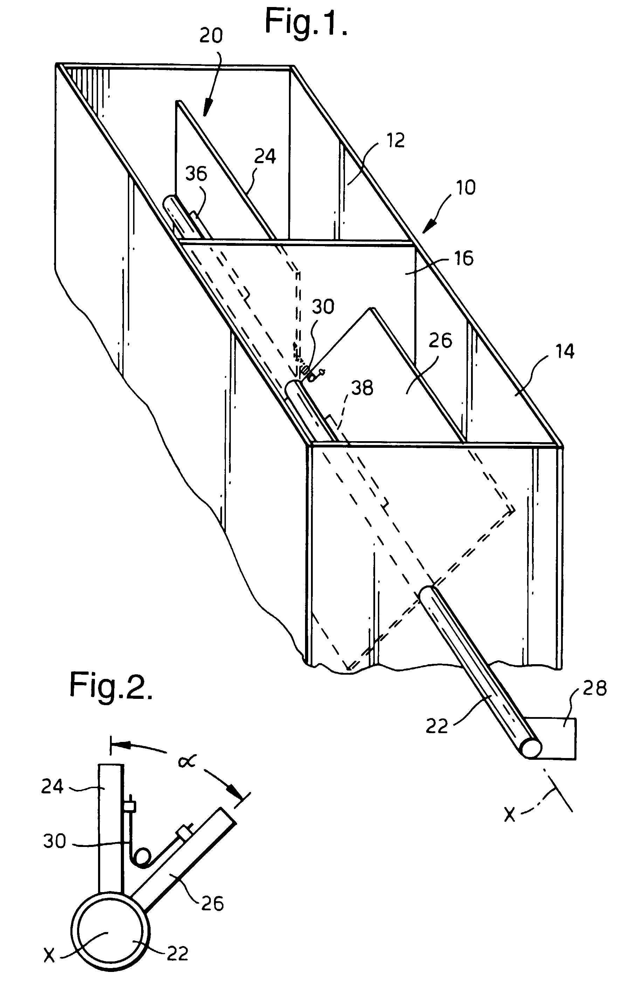

An air treatment system 10 in accordance with the present invention having a flap valve mechanism 20 in accordance with the present invention is shown in Figure 1. The air treatment system 10 is a heating, cooling or ventilating system, or an air conditioning system, for a passenger compartment of a motor vehicle. The air treatment system 10 includes a first duct 12 through which air can flow, and a second duct 14 through which air can flow, the ducts being positioned adjacent one another with a common wall 16.

The flap valve mechanism 20 includes a shaft 22 which extends through the first and second ducts 12,14; a first flap valve 24 rotatably mounted on the shaft and positioned in the first duct; and a second flap valve 26 rotatably mounted on the shaft and positioned in the second duct. The shaft 22 is rotatable about its longitudinal axis X by actuating means 28, which may be a manually operated control device or a reversible electric motor. Spring means 30 (Figure 2) acting on the first and second flap valves 24, 26 biases the flap valves to a predetermined angular separation a relative to each other about the axis X. The spring means 30 may be a coil spring, as shown in Figure 2, which passes through the wall 16, or may be any other suitable biasing arrangement.

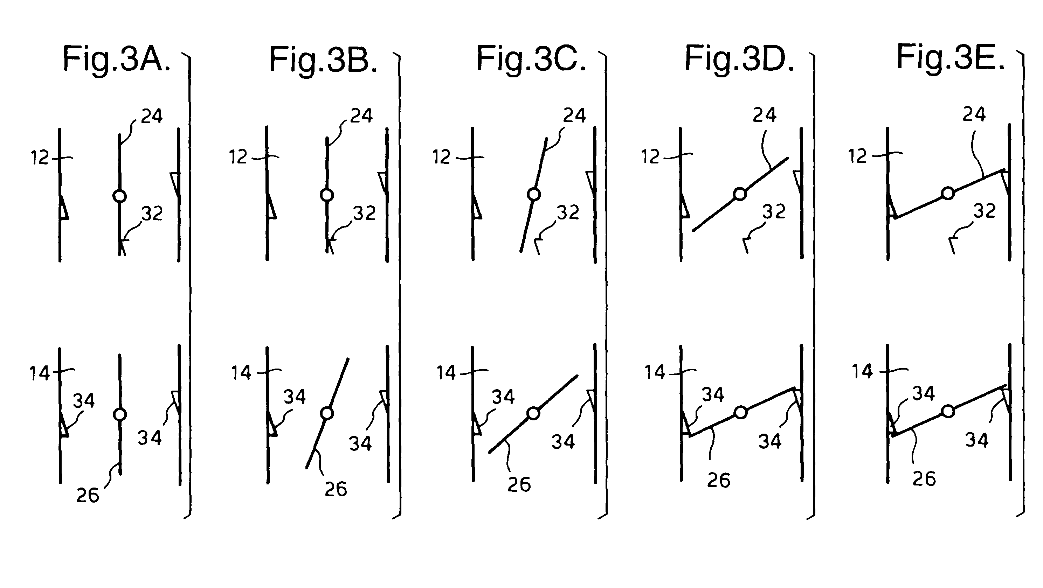

The first flap valve 24 is pivotable relative to the axis X between a substantially fully open position (position A in Figure 3) allowing full air flow through the first duct 12, and a substantially fully closed position (position E in Figure 3) in which air flow through the first duct is substantially prevented. Position B of the first flap valve 24 in Figure 3 is substantially the same as position A, and positions C and D show the first flap valve intermediate positions B and E. The second flap valve 26 is pivotable relative to the axis X between a substantially fully open position (position A in Figure 3) allowing full air flow through the second duct 14, and a substantially fully closed position (position E in Figure 3) in which air flow through the second duct is substantially prevented. Position D of the second flap valve 26 in Figure 3 is substantially the same as position E, and positions B and C show the second flap valve intermediate positions A and D. Due to the biasing effect of the spring means 30, the first and second flap valves 24, 26 have a substantially relative angular separation of angle a between positions B and D. In positions A and B, the first flap valve 24 engages a stop member 32 in the first duct 12, and the second flap valve 26 is moved from position B to position A against the bias of the spring member 30. In positions D and E, the second flap valve 26 engages a stop member 34 in the second duct 14, and the first flap valve 24 is moved from position D to position E against the bias of the spring member 30.

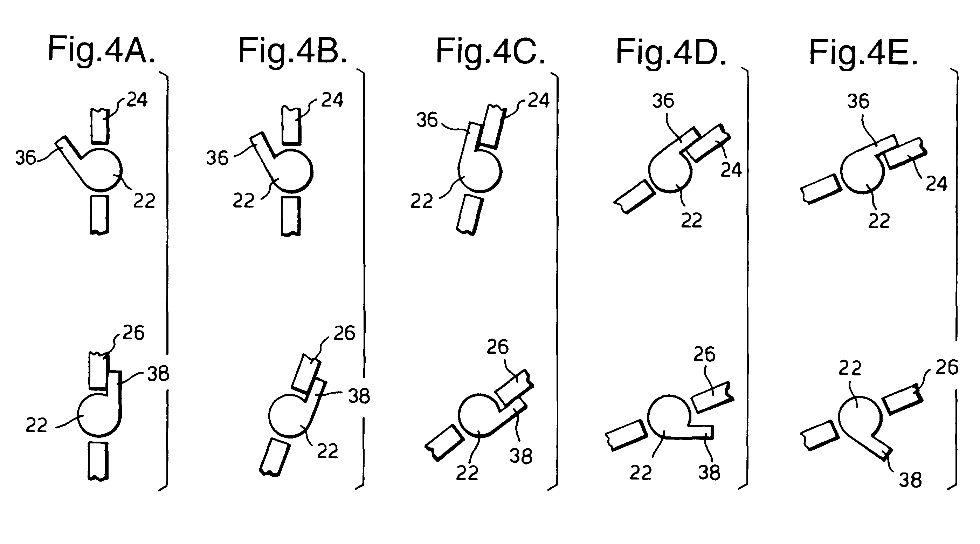

As shown in Figure 4, the shaft 22 has a first radially or tangentially extending tab 36 which is engageable with the first flap valve 24, and a second radially or tangentially extending tab 38 which is engageable with the second flap valve 26. The first and second tabs 36, 38 have an angular separation of approximately angle a about the axis X. As the shaft 22 is rotated in a clockwise direction, as shown in Figure 4, the first tab 36 engages the first flap valve 24 in position B and drives the first flap valve towards position E. During this movement of the first flap valve 24 from position B to position E, the spring means 30 drives the second flap valve 26 from position B to position E. As mentioned above, the first tab 36 drives the first flap valve 24 from position D to position E against the bias of the spring means 30. As the shaft 22 is rotated in an anti-clockwise direction, as shown in Figure 4, the second tab 38 engages the second flap valve 26 in position D and drives the second flap valve towards position A. During this movement of the second flap valve 26 from position D to position A, the spring means 30 drives the first flap valve 24 from position D to position A. As mentioned above, the second tab 38 drives the second flap valve 26 from position B to position A against the bias of the spring means 30.

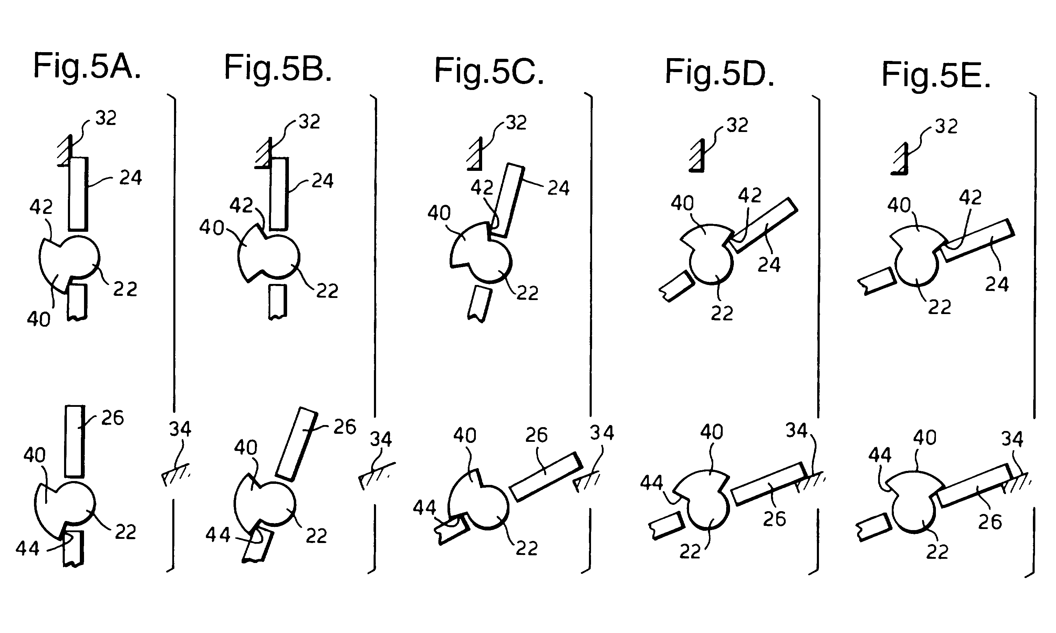

An alternative arrangement for driving the first and second flap valves 24, 26 is shown in Figure 5. In this alternative arrangement, the first and second tabs 36, 38 are replaced by a longitudinally extending cam member 40 formed on the shaft 22, the cam member having a first shoulder 42 which extends radially, and a second shoulder 44 which extends radially. The first and second shoulders 42, 44 have an angular separation which is substantially angle a about the axis X. As the shaft 22 is rotated in a clockwise direction, as shown in Figure 5, the first shoulder 42 engages the first flap valve 24 in position B and drives the first flap valve towards position E. During this movement of the first flap valve 24 from position B to position E, the spring means 30 drives the second flap valve 26 from position B to position E. As mentioned above, the first shoulder 42 drives the first flap valve 24 from position D to position E against the bias of the spring means 30. As the shaft 22 is rotated in an anti-clockwise direction, as shown in Figure 5, the second shoulder 44 engages the second flap valve 26 in position D and drives the second flap valve towards position A. During this movement of the second flap valve 26 from position D to position A, the spring means 30 drives the first flap valve 24 from position D to position A. As mentioned above, the second shoulder 44 drives the second flap valve 26 from position B to position A against the bias of the spring means 30. This arrangement has the advantage over the arrangement of Figure 4 in that the shaft 22 (with the cam member 40) can be formed with a substantially uniform cross-sectional shape along is length.

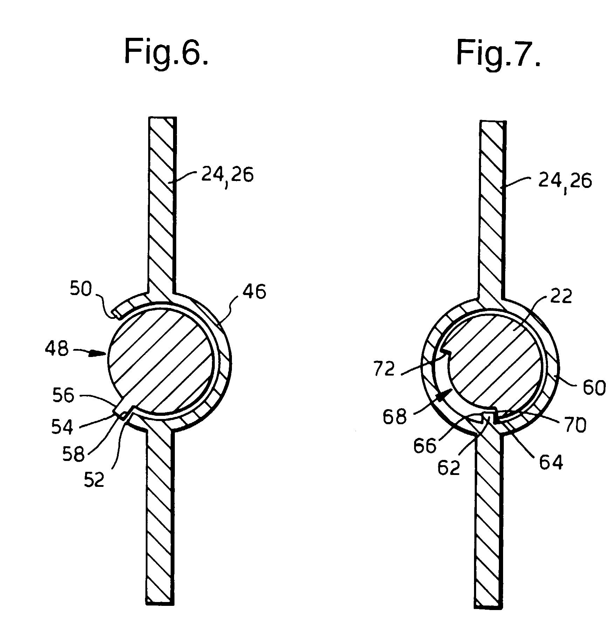

A further alternative arrangement for driving the first and second flap valves 24, 26 is shown in Figure 6. In this further alternative arrangement, the flap valves 24, 26 are each rotatably mounted on the shaft 22 by way of an arcuate member 46 having a longitudinally extending slot 48 defining a first radially extending edge 50 and a second radially extending edge 52. The first and second edges 50, 52 have an angular separation which is substantially angle a about the axis X. The shaft 22 has a tab 54 which radially extends into the slot 48 of each arcuate member 46 and has a first radially extending shoulder 56 and a second radially extending shoulder 58. As the first flap valve 24 is driven from position B to position E, the first shoulder 56 engages the first edge 50. As the second flap valve 26 is driven from position D to position A, the second shoulder 58 engages the second edge 52.

A still further alternative arrangement for driving the first and second flap valves 24, 26 is shown in Figure 7. In this still further alternative arrangement, the flap valves 24, 26 are each rotatably mounted on the shaft 22 by way of an annular member 60 having a longitudinally extending internal tab 62 defining a first radially extending shoulder 64 and a second radially extending shoulder 66. The shaft 22 has a longitudinally extending groove 68 into which the tab 62 of each annular member 60 radially extends. The groove 68 has a first radially extending edge 70 and a second radially extending edge 72. The first and second edges 70, 72 have an angular separation which is substantially angle a about the axis X. As the first flap valve 24 is driven from position B to position E, the first edge 70 engages the first shoulder 64. As the second flap valve 26 is driven from position D to position A, the second edge 72 engages the second shoulder 66.

The present invention provides a flap valve mechanism for an air treatment system in which adjacent flap valves are mounted on a common shaft but may be rotated relative to one another during certain stages of rotation of the shaft by a single actuating device.

In a modification to the above described arrangements, the spring means may be replaced by two separate springs, one acting between the first flap valve and the shaft, and the second acting between the second flap valve and the shaft, but with the effect of biasing the flap valves to a relative angular separation of substantially angle α.

Although the present invention has been described above in relation to two flap valves positioned in adjacent ducts, it will be appreciated that the present invention may also be used where three or more ducts are positioned adjacent one another with a flap valve positioned in each duct, with all the flap valves being mounted on a common shaft, and with spring means biasing two or more of the flap valves to predetermined angular separations relative to one another about the longitudinal axis of the shaft.

In the above described arrangements, the shaft is positioned substantially centrally relative to the flap valves. It will be appreciated that the shaft may be located at other positions relative to the flap valves, and may even be located along an edge of the flap valves.

## Claims

1. A flap valve mechanism for use in the air treatment system of a passenger compartment of a motor vehicle in which the system comprises two adjacent ducts for the flow of air, the mechanism comprising a shaft rotatable about its longitudinal axis and extendable through both ducts; a first flap valve rotatably mounted on the shaft and positionable in one of the ducts, the first flap valve being pivotable about the shaft axis between a substantially fully open position and a substantially fully closed position; a second flap valve rotatably mounted on the shaft and positionable in the other of the ducts, the second flap valve being pivotable about the shaft axis between a substantially fully open position and a substantially fully closed position; first drive means associated with the shaft and the first flap valve for driving the first flap valve from the fully open position to the fully closed position on rotation of the shaft in one direction; second drive means associated with the shaft and the second flap valve for driving the second flap valve from the fully closed position to the fully open position on rotation of the shaft in the other direction; and spring means associated with the first and second flap valves for biasing the first and second flap valves to a predetermined relative angular separation.

2. A flap valve mechanism as claimed in Claim 1, wherein the first drive means comprises a first radially or tangentially extending tab integral with the shaft and engageable with the first flap valve and the shaft rotates on said one direction; and wherein the second drive means comprises a second radially or tangentially extending tab integral with the shaft and engageable with the second flap valve and the shaft rotates on said other direction.

3. A flap valve mechanism as claimed in Claim 1, wherein the first drive means comprises a first radially extending shoulder formed on the shaft and engageable with the first flap valve and the shaft rotates on said one direction; and wherein the second drive means comprises a second radially extending shoulder formed on the shaft and engageable with the second flap valve and the shaft rotates on said other direction; the first and second shoulders being defined by a cam member which is integral with the shaft and extends longitudinally.

4. A flap valve mechanism as claimed in Claim 1, wherein the first flap valve and the second flap valve are each rotatably mounted on the shaft by way of an arcuate member having a longitudinally extending slot defining a first radially extending edge and a second radially extending edge; wherein the shaft has a tab which extends radially into the slot of each arcuate member and has a first radially extending shoulder and a second radially extending shoulder; wherein the first drive means comprises the first radially extending edge and the first radially extending shoulder; and wherein the second drive means comprises the second radially extending edge and the second radially extending shoulder.

5. A flap valve mechanism as claimed in Claim 1, wherein the first flap valve and the second flap valve are each rotatably mounted on the shaft by way of an annular member having a longitudinally extending intenal tab defining a first radially extending shoulder and a second radially extending shoulder; wherein the shaft has a radially extending groove into which the tab of each annular member extends and having a first radially extending edge and a second radially extending edge; wherein the first drive means comprises the first radially extending edge and the first radially extending shoulder; and wherein the second drive means comprises the second radially extending edge and the second radially extending shoulder.

6. A flap valve mechanism as claimed in any one of Claims 1 to 5, wherein the spring means comprises a coil spring acting on the first flap valve and the second flap valve.

7. An air treatment system for the passenger compartment of a motor vehicle comprising a first duct for the flow of air; a second duct for the flow of air adjacent the first duct; a flap valve mechanism including a shaft rotatable about its longitudinal axis and extending through both ducts, a first flap valve rotatably mounted on the shaft in the first duct, the first flap valve being pivotable about the shaft axis a position in which the first duct is substantially fully open and a position in which the first duct is substantially fully closed, a second flap valve rotatably mounted on the shaft in the second duct, the second flap valve being pivotable about the shaft axis between a position in which the second duct is substantially fully open and a position in which the second duct is substantially fully closed, spring means associated with the first and second flap valves for biasing the first and second flap valves to a predetermined relative angular separation, first drive means associated with the shaft and the first flap valve for driving the first flap valve to the fully closed position against the bias of the spring means on rotation of the shaft in one direction, and second drive means associated with the shaft and the second flap valve for driving the second flap valve to the fully open position against the bias of the spring means on rotation of the shaft in the other direction; a first stop member engaging the first flap valve in the fully open position of the first flap valve; a second stop member engaging the second flap valve in the fully closed position of the second flap valve; and actuating means for rotating the shaft about its axis.

8. An air treatment system as claimed in Claim 7, wherein the first drive means comprises a first radially or tangentially extending tab integral with the shaft and engageable with the first flap valve and the shaft rotates on said one direction; and wherein the second drive means comprises a second radially or tangentially extending tab integral with the shaft and engageable with the second flap valve and the shaft rotates on said other direction.

9. An air treatment system as claimed in Claim 7, wherein the first drive means comprises a first radially extending shoulder formed on the shaft and engageable with the first flap valve and the shaft rotates on said one direction; and wherein the second drive means comprises a second radially extending shoulder formed on the shaft and engageable with the second flap valve and the shaft rotates on said other direction; the first and second shoulders being defined by a cam member which is integral with the shaft and extends longitudinally.

10. An air treatment system as claimed in Claim 7, wherein the first flap valve and the second flap valve are each rotatably mounted on the shaft by way of an arcuate member having a longitudinally extending slot defining a first radially extending edge and a second radially extending edge; wherein the shaft has a tab which extends radially into the slot of each arcuate member and has a first radially extending shoulder and a second radially extending shoulder; wherein the first drive means comprises the first radially extending edge and the first radially extending shoulder; and wherein the second drive means comprises the second radially extending edge and the second radially extending shoulder.

11. An air treatment system as claimed in Claim 7, wherein the first flap valve and the second flap valve are each rotatably mounted on the shaft by way of an annular member having a longitudinally extending intenal tab defining a first radially extending shoulder and a second radially extending shoulder; wherein the shaft has a radially extending groove into which the tab of each annular member extends and having a first radially extending edge and a second radially extending edge; wherein the first drive means comprises the first radially extending edge and the first radially extending shoulder; and wherein the second drive means comprises the second radially extending edge and the second radially extending shoulder.

12. An air treatment system as claimed in any one of Claims 7 to 11, wherein the spring means comprises a coil spring acting on the first flap valve and the second flap valve.

13. An air treatment system as claimed in Claims 7 to 12, wherein the actuating means comprises a manually operated control device.
